# EUROPEAN PATENT APPLICATION

(11) **EP 4 783 286 A1**
(43) Date of publication of application: **29.07.2026**
(21) Application number: 24868403.7
(22) Date of filing: 03.04.2024
(51) Int. Cl.: H01M 10/0562, H01M 10/052

(54) **ARGYRODITE-TYPE SULFIDE-BASED SOLID ELECTROLYTE, SOLID ELECTROLYTE MEMBRANE, AND ALL-SOLID-STATE RECHARGEABLE BATTERIES**

(30) Priority: 21.09.2023 KR 20230126492
(71) Applicant: SAMSUNG SDI CO., LTD., Yongin-si, Gyeonggi-do 17084 (KR)
(72) Inventor: OH, Jeongeun, Yongin-si, Gyeonggi-do 17084 (KR); YI, Jeongdoo, Yongin-si, Gyeonggi-do 17084 (KR); KIM, Kookhan, Yongin-si, Gyeonggi-do 17084 (KR); SUNG, Sihyeon, Yongin-si, Gyeonggi-do 17084 (KR); KIM, Hyesu, Yongin-si, Gyeonggi-do 17084 (KR)
(74) Representative: Michalski Hüttermann & Partner mbB
(86) International application number: PCT/KR2024/004368
(87) International publication number: WO 2025/063416

(57) **Abstract**

Provided are an argyrodite-type sulfide-based solid electrolyte represented by Chemical Formula 1 and a solid electrolyte membrane and all-solid-state rechargeable battery including the same.

[Chemical Formula 1] (LiₐM¹_{b}M²_{c})(P_{d}M³ₑ)(S_{f}X¹_{g})X²ₕ

In Chemical Formula 1, 4≤a≤8, M¹ is at least one element selected from Groups 2 and 11 of the periodic table, 0<b<0.5, M² is at least one element other than Li selected from Group 1 of the periodic table, 0≤ c<0.5, M³ is Bi, Cu, Ge, Sb, Si, Sn, Zn, or a combination thereof, 0<d<1, 0<e<1, X¹ is O, N, SOₙ, or a combination thereof, 1.5≤n≤5, 3≤f≤7, 0≤g<2, X² is at least one element selected from Group 17 of the periodic table, and 0<h ≤2.

## Description

### [Technical Field]

Argyrodite-type sulfide-based solid electrolytes, solid electrolyte membranes, and all-solid-state rechargeable batteries are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Because commercially available rechargeable lithium batteries use electrolyte solutions including flammable organic solvents, there are safety issues such as explosion or fire in the event of collision, penetration, and the like. Accordingly, a semi-solid battery or all-solid-state battery that avoids the use of electrolyte solutions is being proposed. An all-solid-state battery is a battery in which all materials are made of solid, particularly a battery that uses solid electrolytes. This all-solid-state battery has the merit of being safe as there is no risk of explosion due to electrolyte solution leakage and the like, and that it is easy to manufacture a thin battery.

As a solid electrolyte, a sulfide-based solid electrolyte with high ionic conductivity is mainly used. Among them, an argyrodite-type sulfide-based solid electrolyte can exhibit high ionic conductivity close to a range of 10⁻⁴ to 10⁻² S/cm, which is the ionic conductivity of a typical liquid electrolyte, at room temperature, and has the advantage of forming a close bond between solid electrolytes and a close bond between the solid electrolyte and the positive electrode active material due to soft mechanical properties. Accordingly, an all-solid-state rechargeable battery using an argyrodite-type sulfide-based solid electrolyte can exhibit improved rate capability, coulombic efficiency, and cycle-life characteristics.

### [Disclosure]

### [Technical Problem]

Provided is an argyrodite-type sulfide-based solid electrolyte that exhibits high lithium ionic conductivity, suppresses chemical side reactions in air, and has improved moisture stability.

### [Technical Solution]

Some embodiments provide an argyrodite-type sulfide-based solid electrolyte represented by Chemical Formula 1.

[Chemical Formula 1] (LiₐM¹_{b}M²_{c})(P_{d}M³ₑ)(S_{f}X¹_{g})X²ₕ

In Chemical Formula 1, 4≤a≤8, M¹ is at least one element selected from Groups 2 and 11 of the periodic table, 0<b<0.5, M² is at least one element other than Li selected from Group 1 of the periodic table, 0≤c<0.5, M³ is Bi, Cu, Ge, **Sb, Si,** Sn, Zn, or a combination thereof, 0<d<1, 0<e<1, X¹ is O, N, SOₙ, or a combination thereof, 1.5≤n≤5, 3≤f≤7, 0≤g<2, X² is at least one element selected from Group 17 of the periodic table, and 0<h ≤2.

Some embodiments provide a solid electrolyte membrane including the aforementioned argyrodite-type sulfide-based solid electrolyte represented by Chemical Formula 1.

In some embodiments, an all-solid-state rechargeable battery includes a positive electrode, a negative electrode, and a solid electrolyte membrane between the positive electrode and the negative electrode, wherein at least one of the positive electrode, the negative electrode, and the solid electrolyte membrane includes the aforementioned argyrodite-type sulfide-based solid electrolyte represented by Chemical Formula 1.

In some embodiments, an all-solid-state rechargeable battery includes a positive electrode, a negative electrode, and a solid electrolyte membrane disposed between the positive electrode and the negative electrode and including the aforementioned argyrodite-type sulfide-based solid electrolyte represented by Chemical Formula 1.

### [Advantageous Effects]

The argyrodite-type sulfide-based solid electrolyte according to some embodiments can achieve high ionic conductivity, suppress chemical side reactions in the air, and exhibit excellent moisture stability. The solid electrolyte membrane and an all-solid-state rechargeable battery including the same may exhibit excellent rate capability, coulombic efficiency, and cycle-life characteristics.

### [Description of the Drawings]

FIGS. 1 and 2 are cross-sectional views schematically showing all-solid-state rechargeable batteries according to some embodiments.
FIG. 3 is an X-ray diffraction (XRD) graph for the solid electrolytes of Comparative Example 1 and Examples 1 to 4.
FIG. 4 is an XRD graph for the solid electrolytes of Comparative Example 1 and Examples 5 to 8.
FIG. 5 is a graph showing ionic conductivity retention rates of the solid electrolytes of Comparative Example 1 and Examples 1, 3, 5, and 6 after being left in a dry room with a dew point of -45 °C or lower for 3 days compared to immediately after synthesis.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

"Combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscopic image.

"Or" is not to be construed as an exclusive meaning, for example, "A or B" is construed to include A, B, A+B, and the like.

"Metal" is interpreted as a concept including ordinary metals, transition metals and metalloids (semi-metals).

### Solid Electrolyte

In some embodiments, an argyrodite-type sulfide-based solid electrolyte represented by Chemical Formula 1 is provided.

[Chemical Formula 1] (LiₐM¹_{b}M²_{c})(P_{d}M³ₑ)(S_{f}X¹_{g})X²ₕ

In Chemical Formula 1, 4≤a≤8, M¹ is at least one element selected from Groups 2 and 11 of the periodic table, 0<b<0.5, M² is at least one element other than Li selected from Group 1 of the periodic table, 0≤c<0.5, M³ is Bi, Cu, Ge, Sb, Si, Sn, Zn, or a combination thereof, 0<d<1, 0<e<1, X¹ is O, N, SOₙ, or a combination thereof, 1.5≤n≤5, 3≤f≤7, 0≤g<2, X² is at least one element selected from Group 17 of the periodic table, and 0<h≤2.

The aforementioned argyrodite-type sulfide-based solid electrolyte represented by Chemical Formula 1 may achieve high lithium ionic conductivity of about 2.0 mS/cm at about 25 °C and high stability against moisture at the same time. For example, the solid electrolyte may have an ionic conductivity retention rate, which is a ratio of ionic conductivity after allowed to stand for about 3 days in a dry room at a dew point of about -45 °C or less to ionic conductivity immediately after the synthesis, of about 67% or more.

The argyrodite-type sulfide-based solid electrolyte according to some embodiments may have a composition of substituting a portion of Li sites with M¹ and optionally, with M² and simultaneously, doping a portion of P sites with M³ and optionally, substituting a portion of S sites with X¹. Such a solid electrolyte may not only realize high lithium ionic conductivity but also exhibit improved moisture stability, compared to a conventional argyrodite-type sulfide-based solid electrolyte.

The solid electrolyte according to some embodiments, in which the portion of lithium sites is substituted with M¹ in its crystal structure, may improve lithium ionic conductivity and reduce activation energy. The M¹ may be, for example, a metal element with an oxidation number of +1 or +2 and a larger ion radius than lithium ion. For example, in Chemical Formula 1, in a case of disposing an element with the same oxidation number as lithium but a larger ion radius than lithium ion in the portion of lithium sites, a volume of the crystal lattice may be increased and thereby, further facilitate movement of lithium ions in the crystal lattice. For another example, in Chemical Formula 1, in a case of disposing an element with the larger oxidation number than lithium in the portion of lithium sites, the portion of lithium sites may be vacant sites and thereby, further facilitate movement of lithium ions in the crystal lattice.

The M¹ may be, for example, Mg, Ca, Cu, Ag, or a combination thereof and for example, Mg, Cu, Ag, or a combination thereof.

In Chemical Formula 1, b indicates a molar ratio of M¹ elements and may be in a range of 0<b<0.5, for example, 0.001≤b<0.5, 0.001≤b≤0.4, 0.001≤b≤0.3, 0.001≤b≤0.2, 0.001≤b≤0.1, 0.001≤b≤0.05, or 0.01≤b≤0.05. In Chemical Formula 1, if b satisfies the ranges, the lithium ionic conductivity of the argyrodite-type sulfide-based solid electrolyte may be further improved.

In Chemical Formula 1, b/(a+b+c) may mean a substitution ratio of M¹ in the lithium sites, for example, 0.001≤b/(a+b+c)≤0.05, 0.001≤b/(a+b+c)≤0.04, 0.001≤b/(a+b+c)≤0.03, 0.001≤b/(a+b+c)≤0.02, or 0.001≤b/(a+b+c)≤0.01. If the substitution ratio of M¹ satisfies the ranges, the lithium ionic conductivity of the argyrodite-type sulfide-based solid electrolyte may be further improved.

In the compound of Chemical Formula 1, the portion of the lithium sites may be optionally substituted with M² in the crystal structure. The M², which is an element other than Li in Group 1 of the periodic table, may be Na, K, Rb, Cs, Fr, or a combination thereof, for example, Na, K, or a combination thereof. The M² may be an element with an oxidation number of +1 and a larger radius than lithium ion. In Chemical Formula 1, if an element with the same oxidation number as lithium and a larger ion radius than lithium ion is disposed in the portion of lithium sites, a volume of the crystal lattice may be increased and thereby, further facilitate the movement of lithium ions in the crystal lattice.

In Chemical Formula 1, c means a molar ratio of M² elements and may be in a range of 0≤c<0.5, for example 0≤c≤0.4, 0≤c≤0.3, 0≤c≤0.2, or 0<c≤0.15.

In Chemical Formula 1, a means a molar ratio of Li and may be in a range of 4≤a≤8, for example, 4≤a≤7 or 5≤a≤6.

The argyrodite-type sulfide-based solid electrolyte according to some embodiments is characterized in that a portion of P sites in the crystal structure is substituted with M³. The M³ is at least one selected from Bi, Cu, Ge, Sb, Si, Sn, and Zn and may be doped in the portion of P sites to improve structural stability of PS₄³⁻ in the argyrodite crystal structure and reducing reactivity of the solid electrolyte with moisture. M³ may be for example Cu, Si, Sn, Zn, or a combination thereof.

On the other hand, Cu elements are substituted in the Li sites (M¹) or the P sites (M³) or in the Li sites and the P sites at the same time. Cu in monovalent oxidation number state may be substituted in the Li sites, while Cu in divalent oxidation number state may be substituted in the P sites, but the present invention is not limited thereto. If the Cu elements are doped in the argyrodite crystal structure, the crystal structure may be further stabilized, and ionic conductivity may be improved.

In Chemical Formula 1, 0.9≤d+e≤ 1.1, for example, d+e=1.

In Chemical Formula 1, a molar ratio of P, which is d, may be, for example, 0.7≤d≤0.99, 0.8≤d≤0.99, 0.9≤d≤0.99, or 0.95≤d≤0.99. In Chemical Formula 1, a molar ratio of M³, which is e, may be, for example, 0.01≤e≤0.3, 0.01≤e≤0.2, 0.01 ≤e≤0.1, or 0.01≤e≤0.05.

In addition, a substitution ratio of M³ in the P sites, which is e/(d+e), may be, for example, 0.01≤e/(d+e)≤0.3, 0.01≤e/(d+e)≤0.2, 0.01≤e/(d+e)≤0.1, or 0.01≤e/(d+e)≤0.5. If the substitution ratio of M³ satisfies the ranges, the argyrodite crystal structure may be further stabilized, and the moisture stability may be improved.

In Chemical Formula 1, f may mean a molar ratio of S and satisfy 3≤f≤7, for example, 3≤f≤6, 3≤f≤5, or 4≤f≤5.

In the argyrodite-type sulfide-based solid electrolyte according to some embodiments, X¹ may optionally substitute a portion of S sites. X¹ may be at least one selected from O, N, and SOₙ, for example, O, SOₙ, or a combination thereof. If the portion of S sites is substituted with X¹, the argyrodite crystal structure may be further stabilized, the ionic conductivity may be further improved, and the moisture stability may be improved.

In some embodiments, if a portion of Li sites is substituted with M¹, a portion of P sites is substituted with M³, and simultaneously, a portion of S sites is substituted with X¹, such a solid electrolyte may not only realize high ionic conductivity, but also moisture stability may be improved.

In Chemical Formula 1, g means a molar ratio of X¹ and may be in a range of 0≤g<2, 0.001≤g≤1.5, 0.01≤g≤1.0, 0.01≤g≤0.9, 0.01≤g≤0.8, 0.01≤g≤0.7, 0.01≤g≤0.6, 0.01≤g≤0.5, 0.01≤g≤0.4, 0.01≤g≤0.3, 0.01≤g≤0.2, 0.01≤g≤0.1, or 0.01≤g≤0.05.

In Chemical Formula 1, a substitution ratio of X¹ in S sites, which is g/(f+g), may be, for example, 0.01≤g/(f+g)≤0.3, for example 0.01≤g/(f+g)≤0.2, 0.01≤g/(f+g)≤0.1, or 0.01≤g/(f+g)≤0.05. If the substituted ratio of X¹ satisfies the ranges, the solid electrolyte may exhibit high lithium ionic conductivity, and the moisture stability may be improved.

In Chemical Formula 1, X², which is a halogen element of Group 17 in the periodic table, may be F, Cl, Br, I, or a combination thereof, for example, Cl, Br, or a combination thereof. In Chemical Formula 1, z indicates a molar ratio of X² and may be within a range of 0≤h≤2, for example, 0<h≤2, 0.5≤h≤2, or 1≤h≤2.

For example, Chemical Formula 1 may be represented by Chemical Formula 2.

[Chemical Formula 2] (LiₐCu_{b})(P_{d}M³ₑ)(S_{f}X¹_{g})X²ₕ

In Chemical Formula 2, 4≤a≤8, 0<b<0.5, M³ is Bi, Cu, Ge, Sb, Si, Sn, Zn, or a combination thereof, 0<d<1, 0<e<1, X¹ is O, N, SOₙ, or a combination thereof, 1.5≤n≤5, 3≤f≤7, 0≤g<2, X² is at least one element selected from Group 17 of the periodic table, and 0<h≤2.

The argyrodite-type sulfide-based solid electrolyte represented by Chemical Formula 2 can achieve very high ionic conductivity and at the same time exhibit high moisture stability.

In Chemical Formula 2, 4≤a≤7, or 5≤a≤6, 0.001≤b<0.5, 0.001≤b≤0.4, 0.001≤b≤0.3, 0.001≤b≤0.2, 0.001≤b≤0.1, 0.001≤b≤0.05, or 0.01≤ b≤0.05, 0.7≤d≤0.99, 0.8≤d≤0.99, 0.9≤d≤0.99, or 0.95≤d≤0.99, 0.9≤d+e≤1.1, and as an example, d+e=1. Additionally, in Chemical Formula **2,** 0.01≤e≤0.3, 0.01≤e≤0.2, 0.01≤e≤0.1, or 0.01≤e≤0.05, 3≤f≤6, 3≤f≤5, or 4≤f≤5, 0.001≤g≤1.5, 0.01≤g≤1.0, 0.01≤g≤0.9, 0.01≤g≤0.8, 0.01≤g≤0.7, 0.01≤g≤0.6, 0.01≤g≤0.5, 0.01≤g≤0.4, 0.01≤g≤0.3, 0.01≤g≤0.2, 0.01≤g≤0.1, or 0.01≤g≤0.05, and 0<h≤2, 0.5≤h≤2, or 1≤h≤2.

The argyrodite-type sulfide-based solid electrolyte represented by Chemical Formula 1 according to some embodiments may be represented by, for example, the chemical formulas listed in Table 1, but is not limited thereto.

**(Table 1)**

| | |
|---|---|
| (1) | Li_{5.765}Cu_{0.03}P_{0.985}Zn_{0.015}S_{4.75}Cl_{1.25} |
| (2) | Li_{5.81}Cu_{0.03}P_{0.97}Zn_{0.03}S_{4.75}Cl_{1.25} |
| (3) | Li_{5.73}Cu_{0.03}P_{0.99}Sn_{0.01}S_{4.75}Cl_{1.25} |
| (4) | Li_{5.75}Cu_{0.03}P_{0.97}Sn_{0.03}S_{4.75}Cl_{1.25} |
| (5) | Li_{5.735}Cu_{0.03}P_{0.985}Si_{0.015}S_{4.75}Cl_{1.25} |
| (6) | Li_{5.75}Cu_{0.03}P_{0.97}Si_{0.03}S_{4.75}Cl_{1.25} |
| (7) | Li_{5.82}Cu_{0.03}P_{0.9}Si_{0.1}S_{4.75}Cl_{1.25} |
| (8) | Li_{5.92}Cu_{0.03}P_{0.8}Si_{0.2}S_{4.75}Cl_{1.25} |
| (9) | Li_{5.735}Cu_{0.03}P_{0.985}Sn_{0.015}Sn_{4.725}(SO₄)_{0.025}Cl_{1.25} |
| (10) | Li_{5.75}Cu_{0.03}P_{0.97}Si_{0.03}S_{4.725}(SO₄)_{0.025}Cl_{1.25} |
| (11) | Li_{6.02}Cu_{0.03}P_{0.7}Sn_{0.3}S_{4.75}Br_{1.25} |
| (12) | Li_{6.02}Cu_{0.03}P_{0.7}Sn_{0.3}S_{4.75}I_{1.25} |

The solid electrolyte according to some embodiments may have ionic conductivity of about 1.0 mS/cm or more at about 25 °C, for example, about 2.0 mS/cm or more, for example, about 2.0 mS/cm to about 10 mS/cm, or about 2.0 mS/cm to about 6 mS/cm. A solid electrolyte membrane or an all-solid-state rechargeable battery to which such a solid electrolyte is applied may facilitate ion transfer, resultantly reducing internal resistance but improving output characteristics, rate characteristics, etc.

The solid electrolyte according to some embodiments is characterized to have high stability against moisture, for example, exhibits an ionic conductivity retention rate, which is a ratio of ionic conductivity after allowed to stand for about 3 days in a dry room at a dew point of about -45 °C or less to ionic conductivity immediately after the synthesis, of about 67% or more, for example, about 68% or more, about 69% or more, or about 85% or more.

The argyrodite-type sulfide-based solid electrolyte belongs to a cubic crystal system, for example, a F-43m space group.

The argyrodite-type sulfide-based solid electrolyte may be in the form of particles and have an average particle diameter (D₅₀) of for example, about 0.1 µm to about 5.0 µm or about 0.1 µm to about 3.0 µm, and may be small particles of about 0.1 µm to about 1.9 µm, or large particles of about 2.0 µm to about 5.0 µm. The solid electrolyte may be prepared by mixing the small particles with an average particle diameter of about 0.1 µm to about 1.9 µm and the large particles with an average particle diameter of about 2.0 µm to about 5.0 µm. Herein, the average particle diameter may be measured from an electron microscope image, for example, a scanning electron microscope image by measuring a size (a diameter or a length of a major axis) of about 20 particles to obtain a particle size distribution and then, calculating D₅₀ therefrom.

### Method of Preparing Argyrodite-type Sulfide-based Solid Electrolyte

The argyrodite-type sulfide-based solid electrolyte according to some embodiments may be prepared, for example, by mixing lithium sulfide, phosphorus sulfide, an M¹ raw material, an M³ raw material, and lithium halide, and optionally mixing an M² raw material or a X¹ raw material.

The M¹ raw material may be a sulfide containing the M¹ element, such as MgS, CaS, CuS, Cu₂S, AgS, and the like. The M² raw material may be a sulfide containing the M² element, or may be Na₂S, K₂S, and the like. The M³ raw material may be a sulfide containing the M³ element, and may be Bi₂S₃, CuS, GeS₂, Sb₂S₃, SiS₂, SnS₂, ZnS, and the like. The X¹ raw material may be lithium oxide, lithium nitride, lithium oxynitride, phosphorus oxide such as P₂O₅.

The raw materials may be stoichiometrically measured and mixed to obtain the aforementioned compound of Chemical Formula 1. Mechanical milling or solution method can be applied as a method of mixing the above raw materials. The mechanical milling is to make starting materials into particulates by putting the starting materials in a ball mill reactor and fervently stirring them. The solution method may be performed by mixing the starting materials in a solvent to obtain a solid electrolyte as a precipitate.

Heat treatment may be performed after mixing the raw materials, in which case the crystals of the solid electrolyte can become stronger and ionic conductivity can be improved. The heat treatment may be carried out at a temperature range of about 400 °C to about 600 °C, for example about 450 °C to about 500 °C, or about 460 °C to about 490 °C, for about 5 hours to about 30 hours, about 10 hours to about 24 hours, or about 15 hours to about 20 hours. If heat treated under the above conditions, ionic conductivity may be maximized.

As an example, a sulfide-based solid electrolyte with high ionic conductivity and robustness may be prepared by mixing the raw materials and heat treating them twice or more. The preparing of the argyrodite-type sulfide-based solid electrolyte may include, for example, a first heat treatment in which raw materials are mixed and fired at about 120 °C to about 350 °C, and a second heat treatment in which the resultant of the first heat treatment is mixed again and fired at about 350 °C to about 800 °C. The first heat treatment and the second heat treatment may be performed in an inert gas or nitrogen atmosphere, respectively. The first heat treatment may be performed for about 1 hour to about 10 hours, and the second heat treatment may be performed for about 5 hours to about 20 hours. Small raw materials may be milled through the first heat treatment, and a final solid electrolyte can be synthesized through the second heat treatment. Through such two or more heat treatments, an argyrodite-type sulfide-based solid electrolyte having high ionic conductivity and high performance can be obtained, and such a solid electrolyte may be suitable for mass production. The temperature of the first heat treatment may be, for example, about 150 °C to about 330 °C, or about 200 °C to about 300 °C, and the temperature of the second heat treatment may be, for example, about 380 °C to about 700 °C, or about 400 °C to about 600 °C.

A cooling step may be further performed after heat treatment, and the cooling rate may be about 0.5 °C/min to about 3 °C/min, for example, about 0.5 °C/min to about 1.5 °C/min. Ionic conductivity can be maximized by adjusting the cooling rate within the above range.

### Solid Electrolyte Membrane

In some embodiments, a solid electrolyte membrane includes the aforementioned argyrodite-type sulfide-based solid electrolyte represented by Chemical Formula 1. Based on 100 wt% of the solid electrolyte membrane, the aforementioned argyrodite-type sulfide-based solid electrolyte represented by Chemical Formula 1 may be included in an amount of about 70 wt% to about 100 wt%, for example about 80 wt% to about 99.5 wt%, about 90 wt% to about 99 wt%, or about 95 wt% to about 98 wt%.

A thickness of the solid electrolyte membrane may be about 100 µm to about 1000 µm, for example about 100 µm to about 900 µm, about 100 µm to about 800 µm, about 100 µm to about 500 µm, or about 200 µm to about 400 µm.

In addition to the aforementioned argyrodite-type sulfide-based solid electrolyte of Chemical Formula 1, the solid electrolyte membrane may further include a sulfide-based solid electrolyte of another composition, an oxide-based solid electrolyte, a halide-based solid electrolyte, or a combination thereof.

### Other Sulfide-based Solid Electrolytes

In general, the sulfide-based solid electrolyte may include, for example Li₂S-P₂S₅, Li₂S-P₂S₅-LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are an integer, respectively, and Z is Ge, Zn, or Ga), Li₂S-GeS₂, Li₂S-SiS₂-Li₃PO₄, Li₂S-SiS₂-LiₚMO_{q} (wherein p and q are integers, and M is P, Si, Ge, B, Al, Ga, or In), or a combination thereof.

Such a sulfide-based solid electrolyte may be obtained by, for example, mixing Li₂S and P₂S₅ in a molar ratio of about 50:50 to about 90:10 or about 50:50 to about 80:20 and optionally, performing heat-treatment. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

### Oxide-based Solid Electrolyte

The oxide-based solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}TiyO₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSiyP_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂0₃-SiO₂-P₂O₅-TiO₂-GeO₂-based ceramics, Garnet-based ceramics Li₃₊ₓLa₃M₂O₁₂ (wherein M = Te, Nb, or Zr; x is an integer of 1 to 10), or a mixture thereof.

### Halide-based Solid Electrolyte

The solid electrolyte membrane may further include, for example, a halide-based solid electrolyte. The halide-based solid electrolyte may include a halogen element as a main component, meaning that a ratio of the halogen element to all elements constituting the solid electrolyte is about 50 mol% or more, about 70 mol% or more, about 90 mol% or more, or about 100 mol%. As an example, the halide-based solid electrolyte may not include sulfur element.

The halide-based solid electrolyte may include a lithium element, a metal element other than lithium, and a halogen element. The metal element other than lithium may include Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and for example, it may be CI, Br, or a combination thereof. The halide-based solid electrolyte may be, for example, represented by LiₐM₁X₆ (M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and 2≤a≤3). The halide-based solid electrolyte may include, for example, Li₂ZrCl₆, Li_{2.7}Y_{0.7}Zr_{0.3}Cl₆, Li_{2.5}Y_{0.5}Zr_{0.5}Cl₆, Li_{2.5}In_{0.5}Zr_{0.5}Cl₆, Li₂In_{0.5}Zr_{0.5}Cl₆, Li₃YBr₆, Li₃YCl₆, Li₃YBr₂Cl₄, Li₃YbCl₆, Li_{2.6}Hf_{0.4}Yb_{0.6}Cl₆, or a combination thereof, but is not limited thereto.

### Binder

The solid electrolyte membrane layer may further include a binder. The binder may include, for example a nitrile-butadiene rubber, a hydrogenated nitrile-butadiene rubber, a styrene-butadiene rubber, an acrylated styrene-butadiene rubber, an acrylonitrile-butadiene rubber, an acrylic rubber, a butyl rubber, a fluorine rubber, a natural rubber, polydimethylsiloxane, polyethyleneoxide, polyvinylpyrrolidone, polyvinylpyridine, chlorosulfonatedpolyethylene, polyvinyl alcohol, polytetrafluoroethylene, polyvinylidene fluoride, a polyvinylidene fluoride-hexafluoropropylene copolymer, polyvinylchloride, carboxylated polyvinylchloride, polyvinylfluoride, polyethylene, polypropylene, an ethylene-propylene copolymer, an ethylene-propylene-diene copolymer, polyamideimide, polyimide, poly(meth)acrylate, polyacrylonitrile, polystyrene, polyurethane, a copolymer thereof, or a combination thereof.

The binder may be included in an amount of about 0.1 wt% to about 3 wt%, for example, about 0.5 wt% to about 2 wt% or about 0.5 wt% to about 1.5 wt% based on about 100 wt% of the solid electrolyte membrane. If the binder is included within the ranges, the components in the solid electrolyte membrane may be well bonded without deteriorating ionic conductivity of the solid electrolyte, resultantly improving durability and reliability of the cell.

### Other Components

The solid electrolyte membrane may optionally further include an alkali metal salt, and/or an ionic liquid, and/or a conductive polymer.

The alkali metal salt may be, for example, a lithium salt. A content of the lithium salt in the solid electrolyte layer may be greater than or equal to about 1 M, for example, about 1 M to about 4 M. In this case, the lithium salt may improve ionic conductivity by improving lithium ion mobility of the solid electrolyte layer.

The lithium salt may be applied without type limitations, and may include, for example, LiPF₆, LiBF₄, LiSbF₆, LiAsF₆, LiClO₄, LiAlO₂, LiAlCl₄, LiPO₂F₂, LiCl, Lil, LiSCN, LiN(CN)₂, lithium bis(oxalato)borate (LiBOB), lithium difluoro (oxalato)borate (LiDFOB), lithium difluorobis(oxalato)phosphate (LiDFBP), lithium bis(trifluoromethanesulfonyl)imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof.

For example, the lithium salt may be an imide-based lithium salt such as LiTFSI, LiFSI, LiBETI, or a combination thereof. The imide-based lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte membrane may be about 0.1:99.9 to about 90:10, for example, about 10:90 to about 90:10, about 20:80 to about 90:10, about 30:70 to about 90: 10, about 40:60 to about 90:10, or about 50:50 to about 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

### All-solid-state Rechargeable Battery

Some embodiments provide an all-solid-state rechargeable battery including a positive electrode, a negative electrode, and a solid electrolyte membrane between the positive electrode and negative electrode. At least one of the positive electrode, the negative electrode, and the solid electrolyte membrane is characterized to include the aforementioned argyrodite-type sulfide-based solid electrolyte represented by Chemical Formula 1. For example, in the all-solid-state rechargeable battery, the positive electrode and/or the solid electrolyte membrane may include the aforementioned argyrodite-type sulfide-based solid electrolyte.

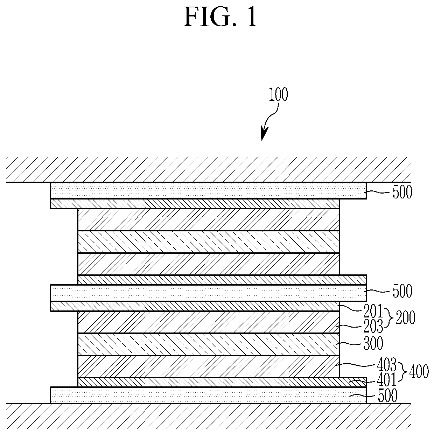

FIG. 1 is a cross-sectional view of an all-solid-state rechargeable battery according to some embodiments. Referring to FIG. 1, the all-solid-state rechargeable battery 100 may be a structure in which a negative electrode 400 including a negative electrode current collector 401 and a negative electrode active material layer 403, a solid electrolyte membrane 300, and a positive electrodes 200 including a positive electrode active material layer 203 and a positive electrode current collector 201 are stacked is housed in a battery case. The cell structure may be a bicell structure in which positive electrode/solid electrolyte membrane/negative electrode/solid electrolyte membrane/positive electrode are stacked in that order. FIG. 1 shows an assembly in which two cell structures including the negative electrode 400, the solid electrolyte layer 300, and the positive electrode 200 are stacked, but three or more, for example, 2 to 200, 3 to 100, 4 to 50, etc. may be stacked.

The all-solid-state rechargeable battery 100 may further include an elastic sheet 500 outside at least one of the positive electrode 200 and the negative electrode 400. That is, the elastic sheet 500 may be disposed between the cell structures and/or may be disposed on the outermost portion of the cell structures.

### Positive Electrode

In some embodiments, the positive electrode includes a current collector and a positive electrode active material layer on the current collector, and the positive electrode active material layer may include a positive electrode active material and may optionally include a solid electrolyte, a binder, and/or a conductive material.

### Positive Electrode Active Material

The positive electrode active material may include a compound (lithiated intercalation compound) being capable of intercalating and deintercalating lithium. For example, at least one of a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free lithium nickel-manganese-based oxide, overlithiated layered oxide, or a combination thereof.

As an example, the positive electrode active material may be a high nickel-based positive electrode active material having a nickel content of greater than or equal to about 80 mol% based on 100 mol% of metals excluding lithium in the lithium transition metal composite oxide. The nickel content in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of metals excluding lithium. The high-nickel-based positive electrode active materials can achieve high capacity and can be applied to high-capacity, high-density rechargeable lithium batteries.

As a more specific example, a compound represented by any of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ **0.5, 0** ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤0.5,0< α < 2); LiₐNi_{1-b-c}Mn_{b}X_{c}O_{2-α}D_{α} (0.90 ≤ a ≤ 1.8,0 ≤ b ≤ 0.5, 0 ≤ c ≤ 0.5, 0 < α <2);LiₐNi_{b}CocL¹ _{d}GeO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8)

In the above chemical formulae, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and L¹ is Mn, Al, or a combination thereof.

The positive electrode active material may be, for example, lithium nickel-based oxide represented by Chemical Formula 11, lithium cobalt-based oxide represented by Chemical Formula 12, lithium iron phosphate-based compound represented by Chemical Formula 13, cobalt-free lithium nickel-manganese-based oxide represented by Chemical Formula 14, or a combination thereof.

[Chemical Formula 11] Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, and Zr, and X is one or more elements selected from F, P, and S.

In Chemical Formula 1, 0.6≤x1≤1, 0≤y1≤0.4, and 0≤z1≤0.4, or 0.8≤x1≤1, 0≤y1≤0.2, and 0≤z1≤0.2.

[Chemical Formula 12] Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤ 1.1, and 0≤b2≤0.1, M³ is one or more elements selected from Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from F, P, and S.

[Chemical Formula 13] Liₐ₃Feₓ₃M⁴_{y3}PO_{4-b3}Xb₃

In Chemical Formula 13, 0.9≤a3≤1.8, 0.6≤x3≤1, 0≤y3≤0.4, and 0≤b3≤0.1, M⁴ is one or more elements selected from Al, B, Ba, Ca, Ce, Co, Cr, Cu, Mg, Mn, Mo, Ni, Se, Si, Sn, Sr, Ti, V, W, Y, Zn, and Zr, and X is one or more elements selected from F, P, and S.

[Chemical Formula 14] Liₐ₄Niₓ₄Mn_{y4}M⁵_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, and 0≤b4≤0.1, M⁵ is one or more elements selected from Al, B, Ba, Ca, Ce, Cr, Fe, Mg, Mo, Nb, Si, Sn, Sr, Ti, V, W, and Zr, and X is one or more elements selected from **F, P,** and S.

The average particle diameter (D₅₀) of the positive electrode active material may be about 1 µm to about 25 µm, for example about 3 µm to about 25 µm, about 1 µm to about 20 µm, about 1 µm to about 18 µm, about 3 µm to about 15 µm, or about 5 µm to about 15 µm. As an example, the positive electrode active material may include small particles having an average particle diameter (D₅₀) of about 1 µm to about 9 µm and large particles having an average particle diameter (D₅₀) of about 10 µm to about 25 µm. The positive electrode active material having this particle size range can be harmoniously mixed with other components within the positive electrode active material layer and can achieve high capacity and high energy density. Herein, the average particle diameter may be obtained by selecting about 20 particles at random in the scanning electron microscopic image of the positive electrode active material, measuring the particle diameter (diameter, long axis, or length of the major axis) to obtain the particle size distribution, and taking the diameter (D₅₀) of particles with a cumulative volume of 50 volume% in the particle size distribution as the average particle diameter.

The positive electrode active material may be in the form of secondary particles made by agglomerating a plurality of primary particles, or may be in the form of single particles. Additionally, the positive electrode active material may have a spherical or close to spherical shape, or may have a polyhedral or irregular shape.

Meanwhile, the positive electrode active material may include a buffer layer on the particle surface. The buffer layer can be expressed as a coating layer, a protective layer, etc., and can play a role in lowering the interfacial resistance between the positive electrode active material and the sulfide-based solid electrolyte particles. As an example, the buffer layer may include lithium-metal-oxide, wherein the metal may be, for example, one or more elements selected from Al, B, Ca, Ce, Cr, Fe, Mg, Mo, Nb, Si, Sn, Sr, Ta, V, W, and Zr. The lithium-metal-oxide is excellent for improving the performance of the positive electrode active material by facilitating the movement of lithium ions and electronic conduction, while lowering the interfacial resistance between the positive electrode active material and solid electrolyte particles.

The positive electrode active material may be included in an amount of about 55 wt% to about 99.5 wt%, for example, about 65 wt% to about 95 wt%, or about 75 wt% to about 91 wt%, based on 100 wt% of the positive electrode active material layer.

### Binder

The binder improves binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Each content of the binder and the conductive material may be about 0.5 wt% to about 5 wt%, based on 100 wt% of the positive electrode active material layer.

The positive electrode active material layer may optionally further include a solid electrolyte. The solid electrolyte may be the aforementioned argyrodite-type sulfide-based solid electrolyte represented by Chemical Formula 1, and may include a sulfide-based solid electrolyte of other composition, an oxide-based solid electrolyte, a halide-based solid electrolyte, or a combination thereof.

Based on 100 wt% of the positive electrode active material layer, the solid electrolyte may be included in an amount of about 0.1 wt% to about 35 wt%, for example about 1 wt% to about 35 wt%, about 5 wt% to about 30 wt%, about 8 wt% to about 25 wt%, or about 10 wt% to about 20 wt%.

In the positive electrode active material layer, based on a total of 100 wt% of the positive electrode active material and the solid electrolyte, about 65 wt% to about 99 wt% of the positive electrode active material and about 1 wt% to about 35 wt% of the solid electrolyte may be included, for example, about 80 wt% to about 90 wt% of the positive electrode active material and about 10 wt% to about 20 wt% of the solid electrolyte. If the solid electrolyte is included in the positive electrode within the amount ranges, the efficiency and cycle-life characteristics of the all-solid-state secondary battery can be improved without reducing the capacity.

The positive electrode current collector may include Al, SUS, and the like, but is not limited thereto.

### Negative Electrode

A negative electrode for an all-solid-state rechargeable battery may include a current collector and a negative electrode active material layer on the current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.
The Si-based negative electrode active material or Sn-based negative electrode active material may be mixed with the carbon-based negative electrode active material.

In the negative electrode active material layer, the negative electrode active material may be included in an amount of about 95 wt% to about 99 wt% based on a total weight of the negative electrode active material layer. For example, the negative electrode active material layer may include about 90 wt% to about 99 wt% of the negative electrode active material, about 0.5 wt% to about 5 wt% of the binder, and about 0 wt% to about 5 wt% of the conductive material.

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

The negative electrode current collector may include, for example, a copper foil, a nickel foil, a stainless steel foil, a titanium foil, a nickel foam, a copper foam, a polymer substrate coated with a conductive metal, or a combination thereof.

As another example, the negative electrode for an all-solid-state rechargeable battery may be a precipitation-type negative electrode. The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

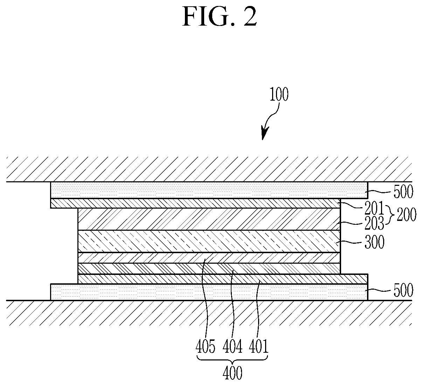

FIG. 2 is a schematic cross-sectional view of an all-solid-state rechargeable battery including a precipitation-type negative electrode. Referring to FIG. 2, the precipitation-type negative electrode 400' may include a current collector 401 and a negative electrode coating layer 405 on the current collector. In an all-solid-state rechargeable battery having such a precipitation-type negative electrode 400', initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a current collector 401, a lithium metal layer 404 on the current collector 401, and a negative electrode coating layer 405 on the metal layer 404. The lithium metal layer 404 may be a layer containing lithium and may refer to a layer in which lithium metal, etc. is precipitated during the charging process of the battery, and may be referred to as a metal layer, lithium layer, lithium electrodeposition layer, or negative electrode active material layer.

The negative electrode coating layer 405 may also be referred to as a lithium electrodeposition inducing layer or a negative electrode catalyst layer, and may include a metal, a carbon material, or a combination thereof.

The metal may be a lithiophilic metal and may include, for example, gold, platinum, palladium, silicon, silver, aluminum, bismuth, tin, zinc, or a combination thereof, and may be composed of one of these or various types of alloys. When the lithiophilic metal exists in particle form, its average particle diameter (D₅₀) may be less than or equal to about 4 µm, for example, about 10 nm to about 4 µm, about 10 nm to about 1 µm, or about 10 nm to about 600 nm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, ketjen black, or a combination thereof. As an example, the carbon material may mean amorphous carbon.

If the negative electrode coating layer 405 includes both the lithiophilic metal and the carbon material, the mixing ratio of the lithiophilic metal and the carbon material may be, for example, a weight ratio of about 1:10 to about 2:1. In this case, precipitation of lithium metal can be effectively promoted and the characteristics of the all-solid-state rechargeable battery can be improved. For example, the negative electrode coating layer 405 may include a carbon material on which a catalyst metal is supported, or may include a mixture of metal particles and carbon material particles.

For example, the negative electrode coating layer 405 may include the lithiophilic metal and amorphous carbon, and in this case, it can effectively promote precipitation of lithium metal. As a specific example, the negative electrode coating layer 405 may include a composite in which a lithiophilic metal is supported on amorphous carbon.

The negative electrode coating layer 405 may further include a binder, and the binder may be, for example, a conductive binder. Additionally, the negative electrode coating layer 405 may further include general additives such as a filler, a dispersant, an ion conductive agent, etc.

A thickness of the negative electrode coating layer 405 may be, for example, about 100 nm to about 20 µm, or about 500 nm to about 10 µm, or about 1 µm to about 5 µm.

The precipitation-type negative electrode 400' may further include a thin film, for example, on the surface of the current collector, that is, between the current collector and the negative electrode catalyst layer. The thin film may include an element capable of forming an alloy with lithium. The element capable of forming an alloy with lithium may be, for example, gold, silver, zinc, tin, indium, silicon, aluminum, bismuth, and the like, which may be used alone or in an alloy of more than one. The thin film may further planarize a precipitation shape of the lithium metal layer 404 and much improve characteristics of the all-solid-state rechargeable battery. The thin film may be formed, for example, in a vacuum deposition method, a sputtering method, a plating method, and the like. The thin film may have, for example, a thickness of about 1 nm to about 500 nm.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be about 1 µm to about 500 µm, about 1 µm to about 200 µm, about 1 µm to about 100 µm, or about 1 µm to about 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

An all-solid-state rechargeable battery may be a unit cell with a structure positive electrode/solid electrolyte layer/negative electrode, a bicell with a structure of positive electrode/solid electrolyte layer/negative electrode/ solid electrolyte layer /positive electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, etc. Additionally, the all-solid-state rechargeable battery may also be applied to large batteries used in electric vehicles, etc. For example, the all-solid-state rechargeable battery may also be used in hybrid vehicles such as plug-in hybrid electric vehicles (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples of the present invention and comparative examples are described. It is to be understood, however, that the examples are for the purpose of illustration and are not to be construed as limiting the present invention.

### Example 1

### 1. Preparation of Solid Electrolyte

A precursor mixture was obtained by mixing Li₂S, a lithium precursor, Cu₂S, a copper precursor, P₂S₅, a phosphorus precursor, ZnS, a zinc precursor, and LiCl, a halogen atom precursor, in an Ar atmosphere glove box. At this time, the content of each precursor was stoichiometrically controlled to obtain Li_{5.72}Cu_{0.03}P_{0.985}Zn_{0.015}Sn_{4.75}Cl_{1.25}.

The precursor mixture was added to a planetary ball mill including zirconia balls under an Ar atmosphere and then, pulverized and mixed at 100 rpm for 1 hour and subsequently, at 800 rpm for 30 minutes to obtain a mixture. The obtained mixture was pressed under a uniaxial pressure to a produce a pellet with a thickness of about 10 mm and a diameter of about 13 mm. The manufactured pellet was covered with a gold foil and placed in a carbon crucible, and the carbon crucible was vacuum-sealed. The vacuum-sealed pellet was heated at 1.0 °C/min and heat-treated at 475 °C for 18 hours and then, cooled to room temperature at 1.0 °C/min to prepare a final solid electrolyte.

### 2. Preparation of Solid Electrolyte Membrane

After dissolving an acryl-based binder (SX-A334, Zeon Chemicals L.P.) in an isobutyl isobutyrate (IBIB) solvent to prepare a binder solution, the prepared solid electrolyte was added thereto and then, stirred to prepare slurry. The slurry included 98.5 wt% of the solid electrolyte and 1.5 wt% of the binder. The slurry was applied on a release PET film with a bar coater and then, dried at room temperature to manufacture a solid electrolyte membrane.

### Examples 2 to 10 and Comparative Example 1

A solid electrolyte and a solid electrolyte membrane were manufactured substantially in the same manner as in Example 1 except that the composition of the solid electrolyte was changed as shown in Table 2.

In Examples 3, 4, and 9, SnS₂ was used instead of the ZnS, in Examples 5 to 8 and 10, SiS₂ was used instead of the ZnS, in Examples 9 and 10, Li₂SO₄ was additionally used as a precursor of SO₄, and in Comparative Examples 1, ZnS and Cu₂S were not added.

**(Table 2)**

| | Composition |
|---|---|
| Example 1 | Li_{5.765}Cu_{0.03}P_{0.985}Zn_{N0.015}Sn_{4.75}Cl_{1.25} |
| Example 2 | Li_{5.81}Cu_{0.03}P_{0.97}Zn_{0.03}S_{4.75}Cl_{1.25} |
| Example 3 | Li_{5.73}Cu_{0.03}P_{0.99}Sn_{0.01}S_{4.75}Cl_{1.25} |
| Example 4 | Li_{5.75}Cu_{0.03}P_{0.97}Sn_{0.03}S_{4.75}Cl_{1.25} |
| Example 5 | Li_{5.735}Cu_{0.03}P_{0.985}Sn_{0.015}S_{4.75}Cl_{1.25} |
| Example 6 | Li_{5.75}Cu_{0.03}P_{0.97}Si_{0.03}S_{4.75}Cl_{1.25} |
| Example 7 | Li_{5.82}Cu_{0.03}P_{0.9}Si_{0.1}S_{4.75}Cl_{1.25} |
| Example 8 | Li_{5.92}Cu_{0.03}P_{0.8}Si_{0.2}S_{4.75}Cl_{1.25} |
| Example 9 | Li_{5.755}Cu_{0.03}P_{0.985}Sn_{0.015}S_{4.75}(SO₄)_{0.025}Cl_{1.25} |
| Example 10 | Li_{5.75}Cu_{0.03}P_{0.97}Si_{0.003}S_{4.75}(SO₄)_{0.025}Cl_{1.25} |
| Comparative Example 1 | Li_{5.75}PS_{4.725}Cl_{1.25} |

### Evaluation Example 1: XRD Evaluation

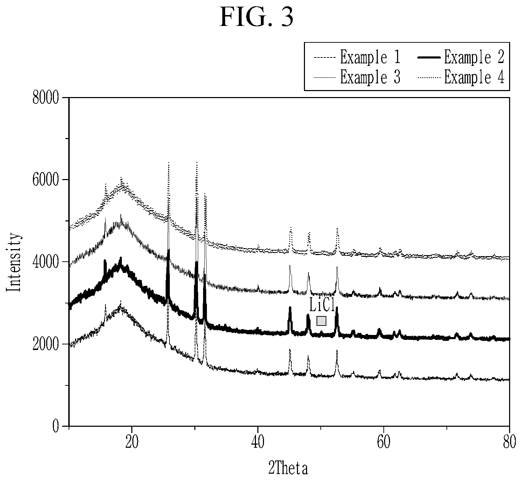

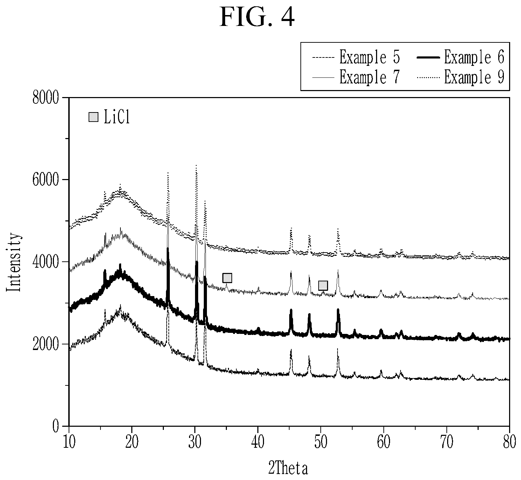

An X-ray diffraction analysis was performed on the solid electrolytes of Examples 1 to 8, and the results are shown in FIGS. 3 and 4. Referring to FIGS. 3 and 4, because additional impurities other than LiCl were not observed, it means that ZnS, SnS₂, or SiS₂ added during the synthesis all participated in an argyrodite crystal structure and was successfully synthesized into a desired solid electrolyte.

### Evaluation Example 2: Evaluation of Atmospheric Stability through Ionic Conductivity Retention Rate

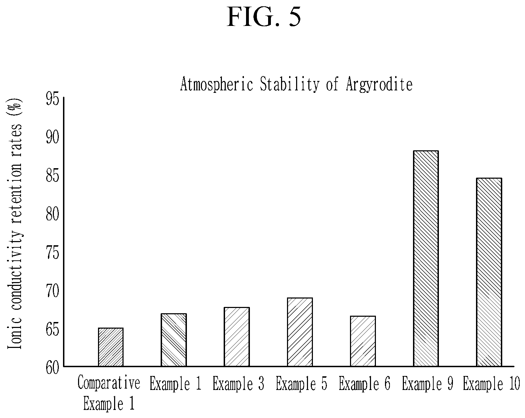

The pellet-type solid electrolytes of Examples 1, 3, 5, 6, 9, and 10 were prepared as specimens. After preparing a symmetrical cell by disposing an indium electrode with a thickness of 50 µm and a diameter of 13 mm on both sides of each specimen, impedance was measured by using an impedance analyzer (Material Mates 7260) in a two-probe method. The impedance was measured within a frequency range of 0.1 Hz to 1 MHz at an amplitude voltage of 10 mV under an Ar atmosphere at 25 °C. After obtaining resistance from a circular arc of a Nyquist plot of the impedance measurements, ionic conductivity was calculated by considering an area and a thickness of each specimen. Each of the specimens was measured with respect to the ionic conductivity immediately after synthesizing the solid electrolytes, and after allowing it to stand in a dry room at a dew point of -45 °C or less, the ionic conductivity was measured again 1 day later and 3 days later, respectively, and the results are shown in Table 3. FIG. 5 is a graph showing a retention rate of the ionic conductivity of after being allowed to stand in the dry room for 3 days to the ionic conductivity immediately after the synthesis of each of the solid electrolytes of Comparative Example 1 and Examples 1, 3, 5, 6, 9, and 10.

**(Table 3)**

| Composition | Ionic conductivity after storage (mS/cm), (retention rate, %) | | |
|---|---|---|---|
| | 0 day | 1 day | 3 day |
| Example 1 | 3.11 | 2.42 (77.7%) | 2.08 (67%) |
| Example 3 | 3.30 | 2.72 (82.4%) | 2.24 (68%) |
| Example 5 | 2.35 | 1.68 (71.4%) | 1.62 (69.2%) |
| Example 6 | 2.82 | 2 (71%) | 1.88 (66.7%) |
| Example 9 | 4.03 | - | 3.6 (89%) |
| Example 10 | 3.57 | 3.33 (93.3%) | 3.04 (85.2%) |
| Comparative Example 1 | 2.80 | - | 1.82 (65.1%) |

Referring to Table 3 and FIG. 5, the solid electrolyte of the examples, in which stable elements against moisture were added into the argyrodite crystal structure, maintained a high ionic conductivity retention rate after being allowed to stand for 1 day and for 3 days, which confirms that atmospheric stability was improved.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

100: all-solid-state battery
200: positive electrode
201: positive electrode current collector
203: positive electrode active material layer
300: solid electrolyte layer
400: negative electrode
401: negative current collector
403: negative electrode active material layer
404: lithium metal layer
405: negative electrode coating layer
500: elastic layer

## Claims

1. An argyrodite-type sulfide-based solid electrolyte represented by Chemical Formula 1:
[Chemical Formula 1] (LiₐM¹_{b}M²_{c})(P_{d}M³ₑ)(S_{f}X¹_{g})X²ₕ
wherein, in Chemical Formula 1,
4≤a≤8,
M¹ is at least one element selected from Groups 2 and 11 of the periodic table, 0<b<0.5,
M² is at least one element other than Li selected from Group 1 of the periodic table, 0≤c<0.5,
M³ is Bi, Cu, Ge, Sb, Si, Sn, Zn, or a combination thereof, 0<d<1, 0<e<1,
X¹ is O, N, SOₙ, or a combination thereof,1.5≤n≤5, 3≤f≤7, 0≤g<2,
X² is at least one element selected from Group 17 of the periodic table, and 0<h ≤ 2.

2. The solid electrolyte as claimed in claim 1, wherein
in Chemical Formula 1, M¹ is Mg, Ca, Cu, Ag, or a combination thereof.

3. The solid electrolyte as claimed in claim 1, wherein
in Chemical Formula 1, 0.001≤b≤0.1.

4. The solid electrolyte as claimed in claim 1, wherein
in Chemical Formula 1, 0.001 ≤b/(a+b+c)≤0.05.

5. The solid electrolyte as claimed in claim 1, wherein
in Chemical Formula 1, M² is Na, K, or a combination thereof, and 0≤c≤0.3.

6. The solid electrolyte as claimed in claim 1, wherein
in Chemical Formula 1, 0.9≤d+e≤1.1, 0.7≤d≤0.99, and 0.01≤e≤0.3.

7. The solid electrolyte as claimed in claim 1, wherein
in Chemical Formula 1, 0.01≤e/(d+e)≤0.3.

8. The solid electrolyte as claimed in claim 1, wherein
in Chemical Formula 1,
3≤f≤5 and 0.01 ≤g≤0.9.

9. The solid electrolyte as claimed in claim 1, wherein
in Chemical Formula 1, 0.01≤g/(f+g)≤0.3.

10. The solid electrolyte as claimed in claim 1, wherein
in Chemical Formula 1, X² is Cl, Br, or a combination thereof, and 1≤h≤2.

11. The solid electrolyte as claimed in claim 1, wherein
Chemical Formula 1 is represented by Chemical Formula 2:
[Chemical Formula 2] (LiₐCu_{b})(P_{d}M³ₑ)(SᵣX¹_{g})X²ₕ
wherein, in Chemical Formula 2,
4≤a≤8, 0<b<0.5,
M³ is Bi, Cu, Ge, Sb, Si, Sn, Zn, or a combination thereof, 0<d<1, 0<e<1,
X¹ is O, N, SOₙ, or a combination thereof,1.5≤n≤5, 3≤f≤7, 0≤g<2,
X² is at least one element selected from Group 17 of the periodic table, and 0<h ≤ 2.

12. The solid electrolyte as claimed in claim 1, wherein
M³ is Cu, Si, Sn, Zn, or a combination thereof.

13. The solid electrolyte as claimed in claim 1, wherein
Chemical Formula 1 is represented by the following chemical formulas:
(1) Li_{5.765}Cu_{0.03}P_{0.985}Zn_{0.015}S_{4.75}Cl_{1.25}
(2) Li_{5.81}Cu_{0.03}P_{0.97}Zn_{0.03}S_{4.75}Cl_{1.25}
(3) Li_{5.73}Cu_{0.03}P_{0.99}Sn_{0.01}S_{4.75}Cl_{1.25}
(4) Li_{5.75}Cu_{0.03}P_{0.97}Sn_{0.03}S_{4.75}Cl_{1.25}
(5) Li_{5.735}Cu_{0.03}P_{0.985}Si_{0.015}S_{4.75}Cl_{1.25}
(6) Li_{5.75}Cu_{0.03}P_{0.97}Si_{0.03}S_{4.75}Cl_{1.25}
(7) Li_{5.82}Cu_{0.03}P_{0.9}Si_{0.1}S_{4.75}Cl_{1.25}
(8) Li_{5.92}Cu_{0.03}P_{0.8}Si_{0.2}S_{4.75}Cl_{1.25}
(9) Li_{5.735}Cu_{0.03}P_{0.985}Sn_{0.015}S_{4.725}(SO₄)_{0.025}Cl_{1.25}
(10) Li_{5.75}Cu_{0.03}P_{0.97}Si_{0.03}S_{4.725}(SO₄)_{0.025}Cl_{1.25}
(11) Li_{6.02}Cu_{0.03}P_{0.7}Sn_{0.3}S_{4.75}I_{1.25}
(12) Li_{6.02}Cu_{0.03}P_{0.7}Sn_{0.3}S_{4.75}I_{1.25}.

14. The solid electrolyte as claimed in claim 1, wherein
the solid electrolyte has an ionic conductivity of greater than or equal to 2.0 mS/cm at 25 °C.

15. The solid electrolyte as claimed in claim 1, wherein
the solid electrolyte is in the form of particles and has an average particle diameter (D₅₀) of 0.1 µm to 5 µm.

16. A solid electrolyte membrane comprising the solid electrolyte as claimed in any one of claim 1 to claim 15.

17. The solid electrolyte membrane as claimed in claim 16, wherein
a thickness of the solid electrolyte membrane is 100 µm to 1000 µm.

18. An all-solid-state rechargeable battery, comprising
a positive electrode,
a negative electrode, and
a solid electrolyte membrane between the positive electrode and the negative electrode,
wherein at least one of the positive electrode, the negative electrode, and the solid electrolyte membrane comprises the solid electrolyte as claimed in any one of claim 1 to claim 15.

19. An all-solid-state rechargeable battery, comprising
a positive electrode,
a negative electrode, and
the solid electrolyte membrane as claimed in claim 16 between the positive electrode and the negative electrode.
